(19) Europäisches Patentamt

European Patent Office

Office européen des brevets

(11) **EP 0 891 949 B1**

(12) **EUROPEAN PATENT SPECIFICATION**

(45) Date of publication and mention
of the grant of the patent:
**19.02.2003 Bulletin 2003/08**

(51) Int Cl.⁷: **C01G 53/00**, H01F 1/00, H01F 1/42

(21) Application number: **96932846.7**

(22) Date of filing: **08.10.1996**

(86) International application number:
**PCT/JP96/02925**

(87) International publication number:
**WO 97/036824 (09.10.1997 Gazette 1997/43)**

(54) **MAGNETIC MOLECULAR MIXTURE**

MAGNETISCHE MOLUKULARE MISCHUNG

MELANGE MOLECULAIRE MAGNETIQUE

(84) Designated Contracting States:
**DE FR GB NL**

(30) Priority: **03.04.1996 JP 8173996
15.07.1996 JP 18522896**

(43) Date of publication of application:
**20.01.1999 Bulletin 1999/03**

(73) Proprietor: **KANAGAWA ACADEMY OF SCIENCE AND TECHNOLOGY
Kawasaki-shi, Kanagawa-ken 213 (JP)**

(72) Inventors:
• **OHKOSHI, Shinichi
Kanagawa-ken 243 (JP)**
• **FUJISHIMA, Akira
Kanagawa-ken 211 (JP)**
• **HASHIMOTO, Kazuhito
New City hongohdai D-213
Kanagawa-ken 244 (JP)**
• **IYODA, Tomokazu
Hachioji-shi, Tokyo 192-0397 (JP)**

(74) Representative: **Calamita, Roberto
Frank B. Dehn & Co.,
European Patent Attorneys,
179 Queen Victoria Street
London EC4V 4EL (GB)**

(56) References cited:
**WO-A-88/06154          JP-A- 3 245 846
JP-A- 6 268 280**

• **DATABASE INSPEC [Online] INSTITUTE OF ELECTRICAL ENGINEERS, STEVENAGE, GB JUSZCZYK S ET AL: "Magnetic and structural properties of Me/sub k/' Me"(CN)/sub p//sub n/.mH/sub 2/O compounds, where Me' are 3d transition metals" Database accession no. 5434288 XP002119541 & EMMA '95 - EUROPEAN MAGNETIC MATERIALS AND APPLICATIONS CONFERENCE, VIENNA, AUSTRIA, 4-8 SEPT. 1995, vol. 157-158, pages 499-500, Journal of Magnetism and Magnetic Materials, May 1996, Elsevier, Netherlands ISSN: 0304-8853**

**Description**

TECHNICAL FIELD

The present invention relates to a molecule mixed magnetic material. More specifically, the present invention relates to a novel molecule mixed magnetic material which can control and design various magnetic characteristics and is useful as various functional materials such as magnetic devices, magnetic shields, sensors, electric motors, etc.

BACKGROUND ART

Hitherto, magnetic materials typified by a metal such as iron, etc., and a metal oxide such as ferrite, etc., are known and recently, in place of these magnetic materials, a so-called molecular magnetic material which can be designed from a molecular level has been watched with keen interest as a material having a possibility of giving higher functions see for example J. Magnetism and Magnetic Materials vol. 157/158 (1996) 499-500, S. Juszczyk et al..

This shows that in molecular materials, the expectation of the molecular magnetic material is large with the capability of designing various structures and the notices to electronic functions or light functions.

However, by the investigations heretofore, the molecular magnetic material is in the state of just beginning and the characteristics and structures of these materials are almost unknown.

Thus, the present invention overcomes the conventional technical limit described above and has been made according to the large expectation to the molecular magnetic material, and an object of the present invention is to provide a molecular magnetic material having new functions together with the excellent magnetic characteristics.

THEME OF THE INVENTION

To solve the problem described above, an aspect of the present invention provides a molecule mixed magnetic material having at least one kind of a magnetic ion unit of a molecular magnetic material showing a ferromagnetism and at least one kind of a magnetic ion unit of a molecular magnetic material showing a ferrimagnetism, wherein the magnetic characteristics are changeable by controlling the existing ratio of both the ion units and also other aspect of the present invention provide the above-described molecule mixed magnetic material, wherein the magnetic characteristics is changeable by the change of a temperature or by the irradiation of light.

Also, still other aspect of the present invention provides a molecule mixed magnetic material which is changeable to the ferromagnetic substance or an antiferromagnetic substance, furthermore, other aspect of the present invention provides the molecule mixed magnetic material wherein the magnetic characteristics such as the saturation magnetization, the coercive force, the residual magnetization, the magnetic phase transition point, etc., are changeable, also still other aspect of the present invention provides the molecule mixed magnetic material wherein the magnetic ion units are made up of transition metals, and moreover, other aspect of the present invention provide the molecule mixed magnetic material wherein the magnetic material has

$$M_1 - B - M_2$$

(wherein $M_1$, $M_2$, and B each represents a magnetic ion and the exchange interaction (J) of each of $M_1$ and $M_2$ and B is $J > 0$ and $J < 0$ to B) as at least the magnetic ion unit, and the existing ratio of the magnetic ions $M_1$ and $M_2$ is controlled; and also another aspect of the present invention provides the molecule mixed magnetic material wherein the magnetic characteristics are changeable and the magnetic pole is inverted by the change of a temperature.

BRIEF DESCRIPTION OF DRAWINGS

Fig. 1 is a conceptional view showing the crystal structure of a complex as an example,
Fig. 2 is a graph showing the composition ratio and the saturated magnetization obtained by measuring the magnetic susceptibility,
Fig. 3 is a graph showing the magnetization curve at the singular point,
Fig. 4 is a graph showing the temperature reliabilities of the saturation magnetization and the magnetic susceptibility at the singular point,
Fig. 5 shows graphs each showing the temperature reliability of the spontaneous magnetization by a mixing ratio,
Fig. 6 shows graphs each showing the result of the computer simulation corresponding to each of Fig. 5,

Fig. 7 is a graph showing the relation with an external magnetization about the temperature reliability of the spontaneous magnetization,

Fig. 8 is a graph showing the magnetization temperature curves of the model of $(A1_xA2_{1-x})_{1.5}B(CN)_6$ before and after the irradiation of light,

Fig. 9 is a graph showing the relationship of the temperarture of $Fe_{1.5}Cr(CN)_6 \cdot 7.5H_2O$ before the irradiation of light and the magnetization in the case that the external magnetic field is 10 G,

Fig. 10 is a graph showing the relation of the temperature of $(Fe_{0.4}Mn_{0.6})_{1.5}Cr(CN)_6$ and the magnetization in the case that the external magnetic field is 10 G,

Fig. 11 is a view showing the relations of the temperatures of $(Fe_{0.4}Mn_{0.6})_{1.5}Cr(CN)_6$ before and after the irradiation of light and the magnetization in the case that the external magnetic field is 10 G, and

Fig. 12 is a view showing the repeated state of the pole inversion of $(Fe_{0.4}Mn_{0.6})_{1.5}Cr(CN)_6$.

BEST MODE FOR CARRYING OUT THE INVENTION

As described above, the present invention provides the molecule mixed magnetic material which has never been known.

More specifically, in the case of an ordinary magnetic substance, the magnetization of the Curie point (Tc) or lower simply increases with lowering of a temperature. On the other hand, it was predicted by Néel that in the theory of ferrimagnetic substance, there was a magnetic substance of which the sign of the magnetization becomes inversely at a certain specific temperature (compensation point), and magnetic substances showing a negative magnetization, such as $NiFe_{2-x}V_xO_4$, etc., have been found.

That is, a new methodology that the super exchange interaction between the most adjacent metals combines a positive magnetization and a negative magnetization, that is a molecular magnetic material capable of controlling the spontaneous magnetization, the Curie temperature, the Weiss temperature, the coercive force, etc., by mixing the ferromagnetic interaction (J > 0) and the antiferromagnetic interaction has been found.

For example, in the system of $(Ni_xMn_{1-x})_{1.5}Cr(CN)_6$, the temperature reliability of various magnetizations can be obtained, it can be designed by a molecular magnetic field theory, in particular, $(Ni_{0.38}Mn_{0.62})_{1.5}Cr(CN)_6$ is magnetized by the inversion of the magnetic pole at 39K or lower, etc. It is considered that such a temperature reliability of various magnetizations depends on that the temperature reliability of the negative magnetization of the $Mn^{II}$ side lattice differs from the temperature reliability of the positive magnetization of the $Cr^{III}$ side lattice.

Also, the essential feature thereof is that the exchange interactions between the positive and negative spins are intermixed and as the result thereof, the magnetic characteristics are changeable.

In the present invention, from the knowledge described above, the exchange interactions between the positive and negative spins are watched and the existing ratios of the magnetic ion units are controlled.

Furthermore, it is considered that in addition to the temperature change described above, when an electron transfer, a spin crossover, a spin flop, etc., by the irradiation of light occurs at the ferro portion or the ferri portion of a ferro-ferri mixed magnetic crystal, the balance of the side lattice magnetization is lost and the magnetic characteristics are changed.

For example, when in the A1 site of the ferro portion or the A2 site of the ferri portion of $(Al_xA2_{1-x})_{1.5}B(CN)_6$, a spin crossover occurs with a visible light, the quantum numbers of A1, A2, and B are assumed to be 1, 2, and 1.5 respectively, and in A1, a spin crossover occurs from A1 (S = 1) to A1 (S = 0), the total magnetization ($M_{total}$) shifts to a negative value by reducing the positive magnetization of A1. On the other hand, when a spin crossover occurs from A2 (S = 2) to A2 (S = 0), the total magnetization ($M_{total}$) shifts to a positive value by reducing the negative magnetization of A2.

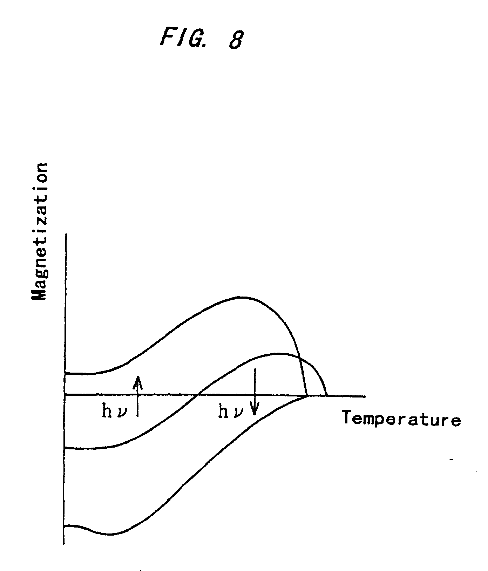

Fig. 8 of the accompanying drawings shows the magnetization temperatures of such a model of $(A1_xA2_{1-x})_{1.5}B(CN)_6$ before and after the irradiation of light.

In the present invention, the magnetic characteristics are changeable by a temperature change or by the irradiation of light as described above.

In addition, the term "spin" is supplemented. The reason for using the term "magnetic ion units" as described above in the present invention is that the magnetic material of the present invention becomes a ferromagnetic substance because the spin is parallel with the ferromagnetism (J > 0) and also becomes a ferromagnetic substance although the spin is antiparallel with the ferrimagnetism (J < o), by the difference of the values, whereby a magnetization remains by the deduction, and because the ferromagnetic substance is a concept that the ferromagnetic substance does not exist if 2 kinds of spins do not exist, as the combination of the magnetic ions, the term "magnetic ion units" is used.

Also, the term "antiferromagnetic substance" used in the present invention does not mean "antiferromagnetism" in an ordinary meaning, that is, does not mean that in the state where same kinds of spins or spins having a same size are antiparallel, a ferromagnetism is not obtained, that is a magnet is not formed. That is, in the present invention, the term "antiferromagnetic substance" is used in the sense that in the ferro·ferri mixed magnetic material of the present invention, the up spin and the down spin each having a different size are canceled with each other, whereby a ferromagnetism, that is a magnet is not obtained on the whole.

In the molecule mixed magnetic material of the present invention wherein the magnetic characteristics are changeable, as a matter of course, there are no particular restrictions on the constituting elements and the kinds of molecules. For example, the molecule mixed magnetic material of the present invention is composed as a composition capable of changing the magnetic characteristics in response to the radiation of light. As the theory of molecular magnetism, the construction is also designed.

For example, the composition is illustrated as

$$M^{II}_{1.5}Cr^{III}(CN)_6$$

Also, the production method of the molecule mixed magnetic material of the present invention is properly considered.

Examples of the present invention are shown below and according to the examples, the mode of the practice of this invention is described in more detail.

EXAMPLE

Example 1

A CN crosslinked metal complex was synthesized as a sample. Practically, the complex was synthesized by reacting an aqueous solution of $K_3Cr(CN)_5$ and an aqueous solution of the mixture of $NiCl_2$ and $MnCl_2$. In addition, the synthesis can be carried out for a thin film formation on the surface of an electrode by an electrochemical reaction and other various kinds of materials are synthesized by various methods. Also, for the identification, an elemental analysis, an atomic absorption spectrometry, an X-ray powder diffraction, a UV-Vis absorption spectrum, and IR spectrum were used and the magnetic measurement was carried out by an SQUID.

The material obtained has a three-dimensional CN crosslinked structure as the CN crosslinked metal complex. The composition ratio of the complex is almost shown by the following formula;

$$M^{II}_{1.5}Cr^{III}(CN)_6$$

In addition, in the composition, practically water: $xH_2O$ (x = 7 to 8) is contained although it is not essential. Also, in the formula, the magnetic ion M represents Ni and Mn. In the synthesis, $Ni_{1.5}Cr(CN)_6$ obtained in the case of not using $MnCl_2$ is ferromagnetic and has the characteristics that Tc is 72 K, the residual magnetization is 3500 $cm^3mol^{-1}$ G, and the coercive force is 15 G. Also, $Mn_{1.5}Cr(CN)_6$ obtained in the case of not using $NiCl_2$ in the synthesis is ferrimagnetic and has the characteristics that Tc is 67 K, the residual magnetization is 770 $cm^3mol^{-1}$ G, and the coercive force is 2 G.

Thus, at the synthesis, the ratio of $NiCl_2$ and $MnCl_2$ was changed, whereby the existing ratio of $Ni^{2+}$ and $Mn^{2+}$, that is the ratio thereof contained in the complex was variously changed.

In addition, it was confirmed by the atomic absorption spectrometry that $Ni^{2+}$ and $Mn^{2+}$ were contained in the complex in the almost prepared mixing ratio. Also, as the result of the X-ray powder diffraction, it was confirmed that by mixing $Ni^{2+}$ and $Mn^{2+}$, the crystal structure was not changed as the face-centered cubic crystal system.

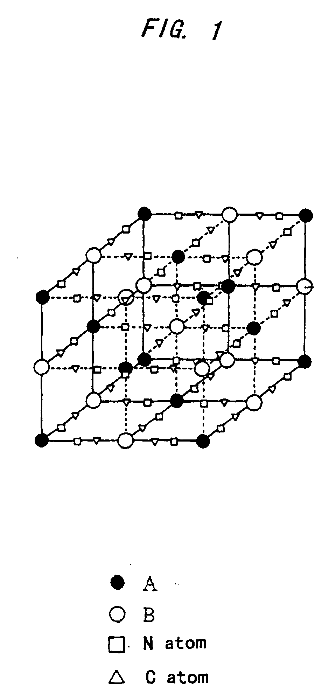

Fig. 1 illustrates the crystal structure, wherein the black solid circle shows $Ni^{2+}$ or $Mn^{2+}$ and the white circle shows $Cr^{3+}$, and they are bonded via CN.

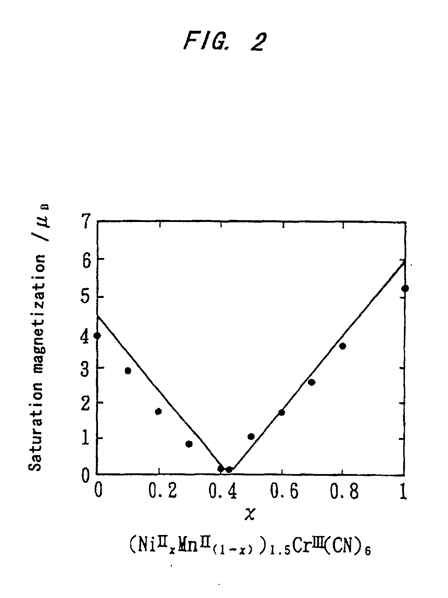

Fig. 2 shows the result of obtaining the saturation magnetizations from the magnetic susceptibilities by SQUID in the case of changing the value of x in the composition of the following formula;

$$[Ni^{II}_x Mn^{II}_{(1-x)}]_{1.5}Cr^{III}(CN)_6$$

that is changing the ratio of $Ni^{2+}$ and $Mn^{2+}$. It was confirmed that when x = 3/7, i.e., Ni : Mn = 3 : 4, the saturation magnetization became zero and the magnetic material was antiferromagnetic.

Also, it was found that while in the case of Ni, the coercive force was 15 G and in the case of Mn, the coercive force was 2 G, the coercive force became considerably large as 300 G at near the minimum point. From these results, it was confirmed that at the synthesis of the molecular magnetic substance, the magnetic characteristics could be variously controlled.

Also, in the following composition formula

$$M_r{}^{II}B^{III}(CN)_6,$$

the saturation magnetic moment μ in the case of using the i kind magnetic ion M can be shown by the following formula

$$(A) \quad \mu = g\mu_B \left| S_{(B)} + y \sum_i a_i q_i S_{(M_i)} \right|$$

(wherein $a_1$ represents an ion fraction, y represents a composition ratio of the $M^{II}$ ion to the $B^{III}$ ion, $S_{()}$ represents a spin quantum number, g represents a g value, $\mu_B$ represents a Bohr magneton, and $q_1$ represents +1 when the exchange interaction (J) between the $B^{III}$ ion and the $M^{II}$ ion is positive and represents -1 when the foregoing exchange interaction is negative), and the above-described results coincide with a theoretical assumption that when the magnetic ion of J > 0 and the magnetic ion of J < 0 to the magnetic ion B are intermixed, there is a singular point showing an anti ferromagnetic property at a certain mixing ratio.

From the above description, it can be also seen that the control of the magnetic characteristics of the molecule mixed magnetic material of the present invention is possible. This is, practically, based on that, for example, in Fig. 2, by selecting the x value, the selection of various characteristics such as the saturation magnetization, the coercive force, the residual magnetization, and the magnetic phase transition point is possible and also the selection of the antiferromagnetism is possible.

Also, it is seen in the present invention that as described above, the magnetic material of the present invention shows an antiferromagnetic property at the singular point and at the same time shows a weak ferromagnetic property. The weak ferromagnetic property is the magnetism appears when the spins are not completely parallel or antiparallel but when the spins lean few degrees (for example, from about 1 to 3°).

The property occurs at the above-described singular point, that is near the point that the up spins ($Ni^{II}$ and $Cr^{III}$) and the down spin ($Mn^{II}$) negate each other, whereby the saturation magnetization shows almost zero. The property is seen from that near the singular point, with the increase of an external magnetic field, the magnetization is increased.

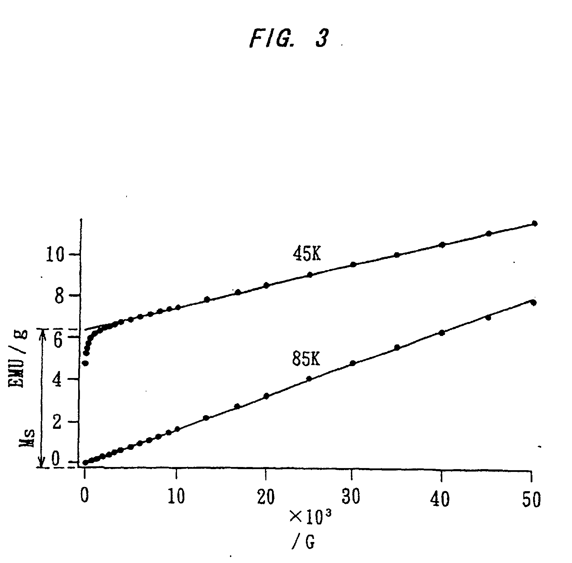

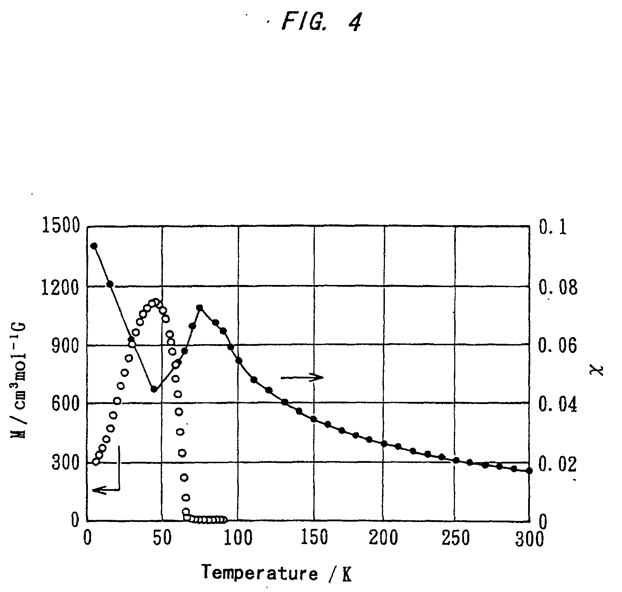

That is, when the magnetization curve was practically measured at each temperature, as is clear from Fig. 3 showing the magnetization curves at the singular point (x = 3/7), at 85 K which was higher than the Curie point (Tc = 68 K) , the linear relation of the magnetic field and the magnetization as conformity with the Curie's law was obtained but at 45 K which was lower than the Curie point, where was a portion which was proportionate to the portion saturated by a magnetic field. When the susceptibility χ and the intercept Ms were plotted, as shown in Fig. 4, χ made an antiferromagnetic behavior having the maximum point (Néel point) (A) at a certain temperature and the Néel point (A) almost coincided with the Curie point (B).

This is the feature of an inclined angle magnetism, that is the magnetism called a weak magnetism or a parasitic magnetism and shows that by the mixing ratio of x = 3/7, the spins incline a little from the complete parallel or antiparallel. In the case of the weak ferromagnetism, the saturation magnetization is the intercept Ms in Fig. 3.

The property of the weak ferromagnetism as described above is one of the features that the magnetic characteristics are changeable in the magnetic material of the present invention.

Also, in the molecule mixed magnetic material of the present invention, it is also the features of this invention that the magnetic characteristics are changed and the pole inversion occurs by the change of temperature.

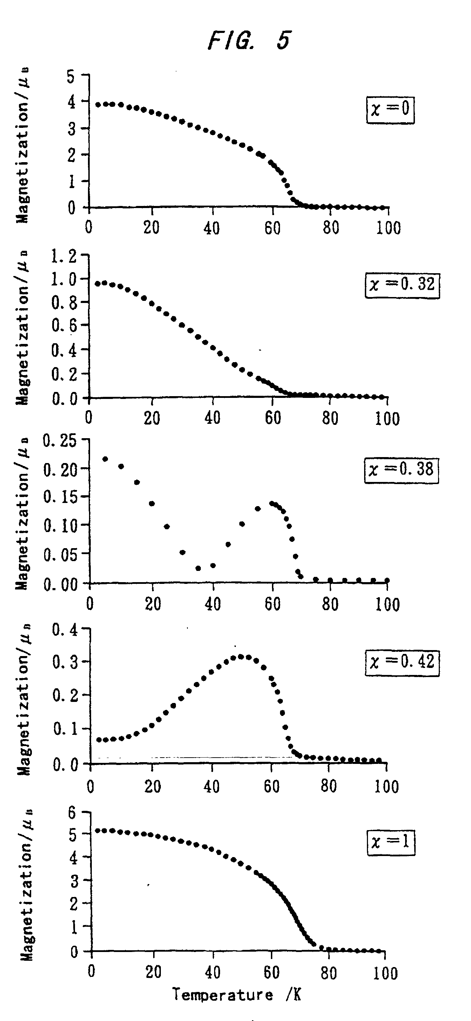

For example, about $(Ni_xMn_{(1-x)})_{1.5}Cr(CN)_6 \cdot 7.5H_2O$, as shown in Fig. 5, with the change of the mixing ratio (x), the temperature reliability of the spontaneous magnetization changes variously.

Such a temperature reliability can be considered by a molecular magnetic field theoretical treatment considering 2 kinds of the super exchange interactions between Mn and Cr and between Ni and Cr.

In the case of considering the super exchange interaction (J) only between the most adjacent magnetic ions, the effective magnetic field Hi sensitive to each magnetic ion can be shown by the following formulae;

$$(B) \quad H_{Mn} = H_0 + n_{Mn-Cr}M_{Cr}$$

$$H_{Ni} = H_0 + n_{Ni-Cr}M_{Cr}$$

$$H_{Cr} = H_0 + n_{Mn-Cr}M_{Mn} + n_{Ni-Cr}M_{Ni}$$

wherein, $H_0$ represents an external magnetic field and $n_{()}$ represents a molecular magnetic field coefficient, and also, the relation of the molecular magnetic field coefficient and the exchange interaction is as shown in the following formulae;

$$(C) \qquad n_{MnCr} = \frac{2Z_{MnCr}}{0.4N(g\mu_B)^2}J_{MnCr}$$

$$n_{NiCr} = \frac{2Z_{NiCr}}{0.4N(g\mu_B)^2}J_{NiCr}$$

$$n_{CrMn} = \frac{2Z_{CrMn}}{0.6N(g\mu_B)^2}J_{MnCr}$$

$$n_{CrNi} = \frac{2Z_{CrNi}}{0.6N(g\mu_B)^2}J_{NiCr}$$

wherein $Z_{()}$ represents the number of j lattice points existing surrounding the i lattice point. The partial magnetization of each lattice and the total lattice magnetizations can be shown by the following formulae;

**(D)**

$$M_{Mn} = 0.6(1-x)Ng\mu_B S_{Mn_o}B_{S_{Mn_o}}\left(\frac{g\mu_B H_{Mn}S_{Mn_o}}{k_B T}\right)$$

$$M_{Ni} = 0.6x\,Ng\mu_B S_{Ni_o}B_{S_{Ni_o}}\left(\frac{g\mu_B H_{Ni}S_{Ni_o}}{k_B T}\right)$$

$$M_{Cr} = 0.4Ng\mu_B S_{Cr_o}B_{S_{Cr_o}}\left(\frac{g\mu_B H_{Cr}S_{Cr_o}}{k_B T}\right)$$

$$M = -M_{Mn} + M_{Ni} + M_{Cr}$$

wherein, B represents a Brillouin function, $S_{MnO}$ is 5/2, $S_{NiO}$ is 1 and $S_{CrO}$ is 3/2.

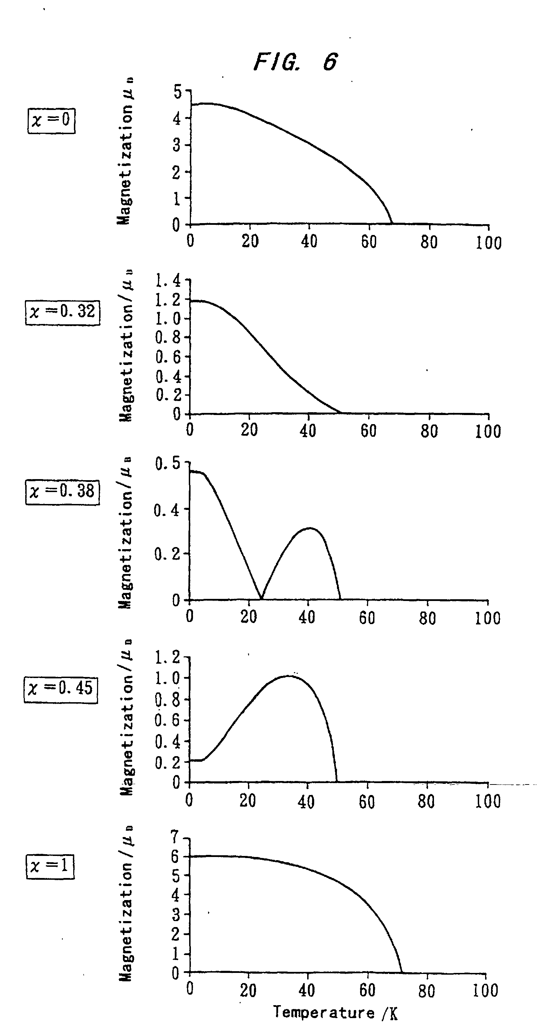

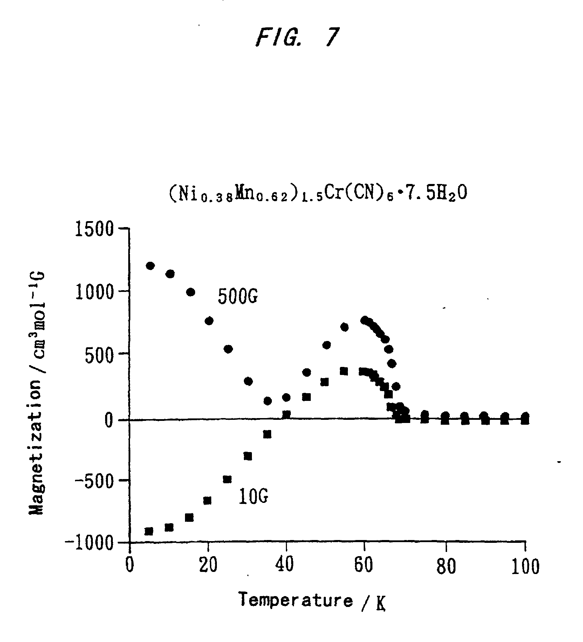

When the above-described model was used and the temperature reliability of the spontaneous magnetization in each mixing ratio of simulated using a computer, as shown in Fig. 6, in the case of one kind of J, with the increase of the temperature, the spontaneous magnetization was reduced (x = o, x = 1) but in the case of the mixture of both of them, the temperature reliability of the spontaneous magnetization having the maximum appeared in the region of a certain mixing ratio. In addition, two maximum points appeared in the region in the vicinity of x = 0.38 In the region, under the condition that an external magnetic field was smaller than the coercive force, the temperature reliability as writing the letter S inserting therein the magnetization being zero to a temperature as shown in Fig. 7 was shown. This showed that the directions of the magnetic poles were inversely at the high temperature side and the low temperature side and thus, the magnetic pole could be inverted by changing a temperature.

Such various temperature reliabilities and the magnetic pole inversion can be said to be the large characteristic behaviors of the ferro-ferri mixed magnetic material. Because the result of the computer simulation almost satisfies the practically measured result, it can be seen that the temperature reliabilities of various spontaneous magnetizations by a magnetic ratio are observed by the difference in the temperature reliabilities of the partial lattice magnetizations of Mn, Ni, and Cr bonded by 2 kinds of the super exchange interactions between Mn and Cr and between Ni and Cr.

Example 2

In the example, $Fe_{1.5}Cr(CN)_6$ as a CN crosslinked metal complex showing the reduction of the magnetization by the induction of light is explained.

$Fe_{1.5}Cr(CN)_6$ as the sample was obtained by mixing an aqueous solution of $FeCl_2$ and an aqueous solution

of $K_3Cr(CN)_6$. From the result of the elemental analysis, it was confirmed that the composition formula was $Fe_{1.5}Cr(CN)_6•7.5H_2O$. By the result of the X-ray powder diffraction, it was confirmed that the structure was a face-centered cubic lattice and the lattice constant was 10.616 A. Also, the magnetic measurement was carried out using an SQUID. The magnetization vs temperature curve showed that Tc was 21 K, the Weiss temperature was 27 K, which showed that the complex was a ferromagnetic substance. The magnetization in 5T (tesla) was 6.6 µB per formula equivalent. The complex showed an electron transfer absorption band between the metal ($Fe^{II}$) and the metal ($Cr^{III}$) in a visible region ($\lambda_{max}$ = 454 nm).

When light irradiation was carried out for several hours at 5 K under an external magnetic field of 10 G, the magnetization of $Fe_{1.5}Cr(CN)_6•7.5H_2O$ was reduced. The effect was kept for several days at 5 K. In this case, a high-pressure mercury lamp was used as a light source for determining a photomagnetic effect. The light was taken in an SQUID through an optical fiber and a sample was irradiated by the light. The powder sample was sandwiched between commercially available cellophane tapes and fixed to the tip of an optical fiber.

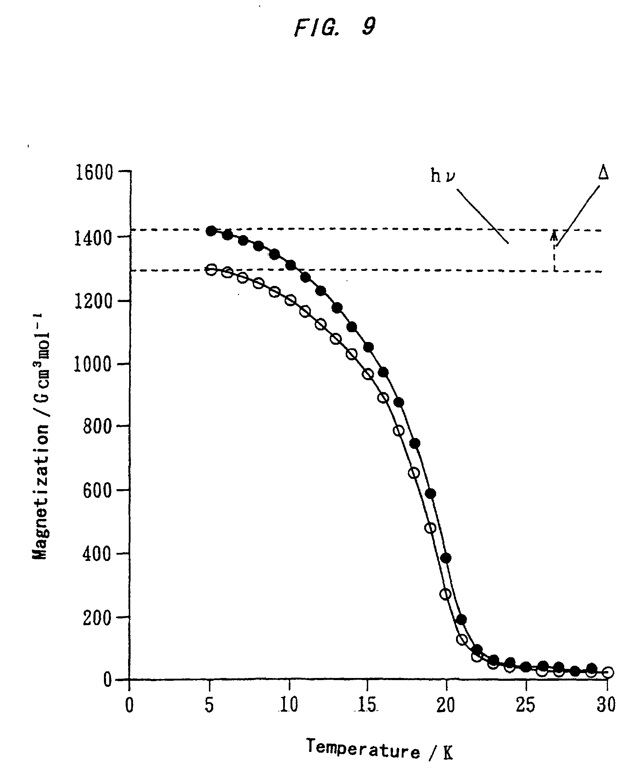

Fig. 9 shows the relation of the temperature and the saturation magnetization of $Fe_{1.5}Cr(CN)_6•7.5H_2O$ before and after the irradiation of the light.

When the sample was annealed to 70 K, the magnetization returned to the value before the irradiation of light. This showed that the magnetization reduced by the irradiation of light was thermally restored to the magnetization before the irradiation of light.

Then, it was attempted to cause a magnetic pole in the CN crosslinked metal complex using the system. In this case, because $Fe_{1.5}Cr(CN)_6$ was a ferromagnetic substance, $Mn_{1.5}Cr(CN)_6•7.5H_2O$ (Tc = 67 K) was selected as the ferri portion of a ferro-ferri mixed magnetic substance.

$Mn_{1.5}Cr(CN)_6•7.5H_2O$ does not have an absorption in the visible region the magnetization thereof is not changed by the irradiation of light. Theoretically, in a ferro-ferri mixed magnetic substance $(Fe_xMn_{1-x})_{1.5}Cr(CN)_6$, because $Cr^{III}$ is alternately bonded to $Fe^{II}$ or $Mn^{III}$, the parallel spins ($Cr^{III}$, $Fe^{II}$) and the antiparallel spin ($Mn^{II}$) are deleted with each other at a mixing ratio, the saturation magnetization is distinguished at x = 1/3, and further it is expected that the complex of near x = 1/3 shows a negative magnetization.

Based on the prediction, the synthesis of $(Fe_xMn_{1-x})_{1.5}Cr(CN)_6$ was carried out.

Tc is reduced from 67 k to 21 K with the increase of x. The saturation magnetization at 5 K is also systematically changed by the change of x. Between x = 0 and x = 0.38, the magnetization is reduced and when x is larger than 0.38, the magnetization is increased. The minimum point is near x = 0.38, at which the magnetization becomes almost zero.

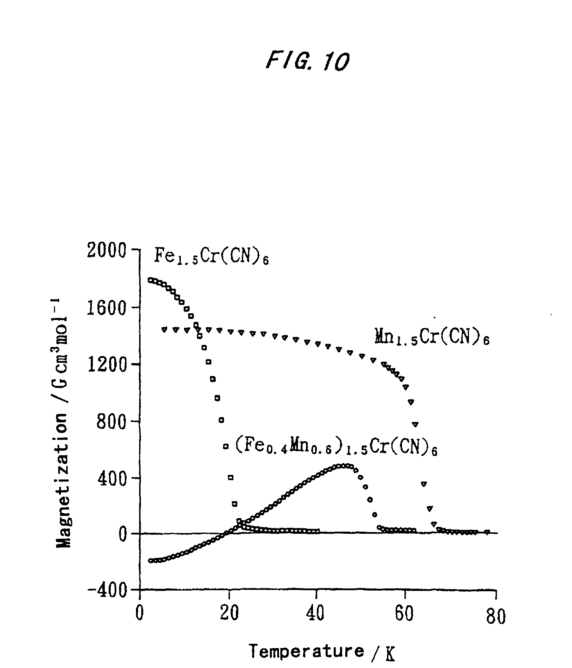

Fig. 10 shows the relation of the temperature and the saturation magnetization of $(Fe_{0.4}Mn_{0.6})_{1.5}Cr(CN)_6$. As shown in Fig. 10, the magnetic material of x = 0.40 showed a negative magnetization at a low temperature.

When the complex was irradiated by a mercury lamp of 15 K for several hours, the magnetization which was negative at 15 K was inverted to positive.

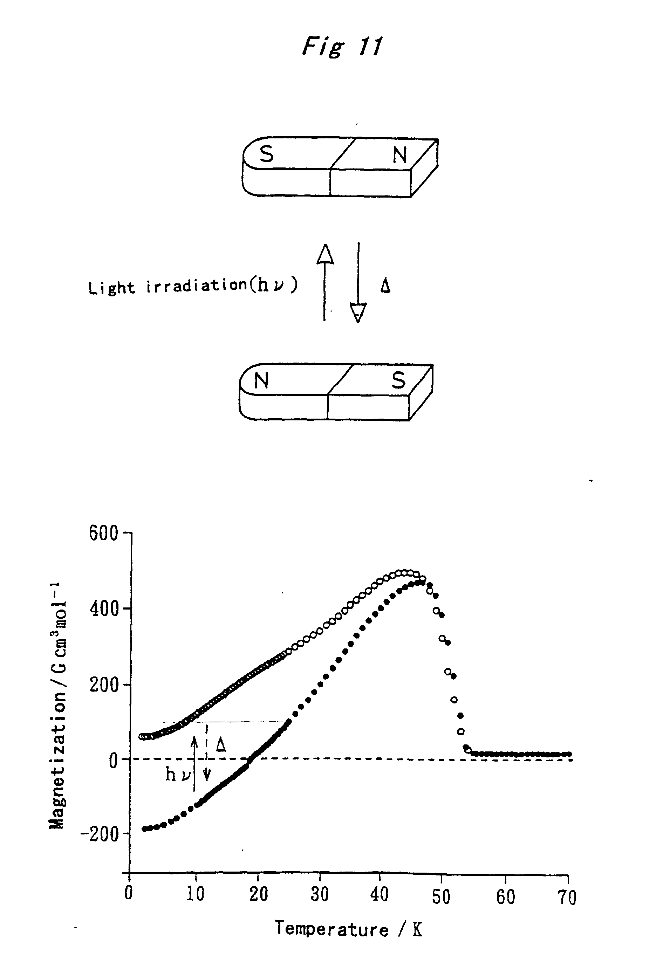

Fig. 11 shows the relation of the temperature and the saturation magnetization of $(Fe_{0.4}Mn_{0.6})_{1.5}Cr(CN)_6$ before and after the irradiation of light.

The pole inversion occurred by changing the ratio of the ferro portion and the ferri portion because the magnetization of (Fe•Cr site) of the ferro portion was reduced. Furthermore, the magnetization of the magnetic material was restored by raising the temperature up to 80 K.

It was confirmed that the magnetic pole inverted by the irradiation of light thermally returned and repeating thereof was possible.

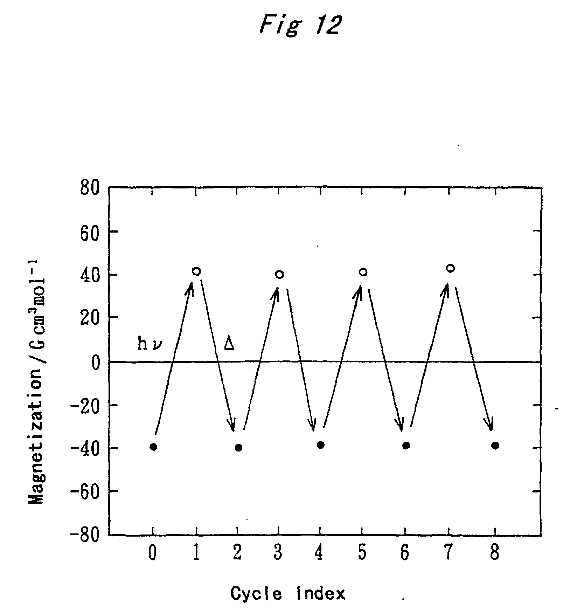

Fig. 12 shows the state of repeating the pole inversion of $(Fe_{0.4}Mn_{0.6})_{1.5}Cr(CN)_6$.

As a matter of course, the present invention is not limited by the above-described examples and according to the present invention, various molecule mixed magnetic materials are provided.

INDUSTRIAL APPLICABILITY

As described in detail above, according to the present invention, a molecule mixed magnetic material capable of controlling the magnetic characteristics thereof is provided. By utilizing the phenomenon of the pole inversion, according to the molecule mixed magnetic material of the present invention combining with a temperature controlling means, it becomes possible to construct a motor apparatus, etc., of an optical mode. Furthermore, according to the present invention, a molecule mixed magnetic material having the excellent magnetic characteristics and also the magnetic character, wherein the light reversible magnetic inversion characteristics, etc., are controlled, can be provided. Also, according to the present invention, the design as functional materials for various purposes becomes possible. Moreover, according to the present invention, the magnetic pole inversion material as an embodiment of the present invention can be applied for an optical mode memory material and also it becomes possible to provide an optical molecular motor which can be applied to micro machines, medical treatment materials, a novel sun light electric power generation, etc.

## Claims

1. A molecule mixed magnetic material having at least 1 kind of a magnetic ion unit of a molecular magnetic material showing ferromagnetism and at least 1 kind of a magnetic ion unit of molecular magnetic material showing ferrimagnetism, **characterized in that** the magnetic characteristics are changeable by controlling the existing ratio of both the ion units.

2. A molecule mixed magnetic material having at least 1 kind of a magnetic ion unit of a molecular magnetic material showing ferromagnetism and at least 1 kind of a magnetic ion unit of molecular magnetic material showing ferrimagnetism, **characterized in that** the magnetic characteristics are changeable by the change of a temperature.

3. A molecule mixed magnetic material having at least 1 kind of a magnetic ion unit of a molecular magnetic material showing ferromagnetism and at least 1 kind of a magnetic ion unit of molecular magnetic material showing ferrimagnetism, **characterized in that** the magnetic characteristics are changeable by the irradiation of light.

4. A molecule mixed magnetic material of claim 1 to 3 wherein the magnetic material is changeable to a ferromagnetic substance and an antiferromagnetic substance.

5. A molecule mixed magnetic material of claim 1 to 3 wherein the magnetic characteristics such as the saturation magnetization, the coercive force, the residual magnetization, the magnetic phase transition point, etc., are changeable.

6. A molecule mixed magnetic material of claim 1 to 5 wherein the magnetic ion unit is made up of a complex of a polynary metal which is a transition metal.

7. A molecule mixed magnetic material of claim 6 wherein at least the magnetic ion unit has

$$M_1 - B - M_2$$

(wherein $M_1$, $M_2$, and B each represents a magnetic ion and the exchange interaction (J) between each of $M_1$ and $M_2$ and B is J > 0 and J < 0 respectively to B)
and the existing ratio of the magnetic ions $M_1$ and $M_2$ is controlled.

8. A molecule mixed magnetic material of claim 1 to 7 wherein the magnetic pole is invertible.

## Patentansprüche

1. Magnetisches Mischmolekülmaterial mit mindestens einem magnetischen Ioneneinheitstyp eines molekularen magnetischen Materials, das ein ferromagnetisches Verhalten zeigt, **dadurch gekennzeichnet, daß** die magnetischen Eigenschaften durch Steuern bzw. Kontrollieren des bestehenden Verhältnisses von beiden der Ioneneinheiten änderbar ist.

2. Magnetisches Mischmolekülmaterial mit mindestens einem magnetischen Ioneneinheitstyp eines molekularen magnetischen Materials, das ferromagnetisches Verhalten zeigt, und mindestens einem magnetischen Ioneneinheitstyp eines molekularen magnetischen Materials, das ferromagnetisches Verhalten zeigt, **dadurch gekennzeichnet, daß** die magnetischen Eigenschaften durch die Änderung einer Temperatur veränderbar sind.

3. Magnetisches Mischmolekülmaterial mit mindestens einem magnetischen Ioneneinheitstyp eines molekularen magnetischen Materials, das ferromagnetisches Verhalten zeigt, und mindestens einem magnetischen Ioneneinheitstyp eines molekularen magnetischen Materials, das ferromagnetisches Verhalten zeigt, **dadurch gekennzeichnet, daß** die magnetischen Eigenschaften durch die Bestrahlung mit Licht veränderbar sind.

4. Magnetisches Molekülmischmaterial nach einem der Ansprüche 1 bis 3, bei dem das magnetische Material zu einer ferromagnetischen Substanz und einer anti-ferromagnetischen Substanz wandelbar ist.

5. Magnetisches Molekülmischmaterial nach einem der Ansprüche 1 bis 3, bei dem die magnetischen Eigenschaften, wie die Sättigungsmagnetisierung, die Koerzitiv-Feldstärke bzw. -Kraft, die Restmagnetisierung, der magnetische Phasenübergangspunkt usw., veränderbar sind.

**6.** Magnetisches Molekülmischmaterial nach einem der Ansprüche 1 bis 5, bei dem die magnetische Ioneneinheit aus einem Komplex eines polynären Metalls besteht, das ein Übergangsmetall ist.

**7.** Magnetisches Molekülmischmaterial nach Anspruch 6, bei dem zumindest die magnetische Ioneneinheit:

$$M_1 - B - M_2$$

hat, (wobei $M_1$, $M_2$ und B jeweils ein magnetisches Ion repräsentieren und die Austauschwechselwirkung (J) zwischen jedem von $M_1$ und $M_2$ und B gleich J > 0 und J < 0 beziehungsweise zu B ist) und das bestehende Verhältnis der magnetischen Ionen $M_1$ und $M_2$ gesteuert bzw. kontrolliert ist.

**8.** Magnetisches Molekülmischmaterial nach einem der Ansprüche 1 bis 7, bei dem der magnetische Pol invertierbar ist.

**Revendications**

**1.** Matériau magnétique à molécules mixtes ayant au moins un type d'un motif ionique magnétique d'un matériau magnétique moléculaire présentant un ferromagnétisme et au moins un type d'un motif ionique magnétique de matériau magnétique moléculaire présentant un ferrimagnétisme, **caractérisé en ce que** les caractéristiques magnétiques peuvent être changées par contrôle du rapport existant entre les deux motifs ioniques.

**2.** Matériau magnétique à molécules mixtes ayant au moins un type d'un motif ionique magnétique d'un matériau magnétique moléculaire présentant un ferromagnétisme et au moins un type d'un motif ionique magnétique de matériau magnétique moléculaire présentant un ferrimagnétisme, **caractérisé en ce que** les caractéristiques magnétiques peuvent être changées par un changement de la température.

**3.** Matériau magnétique à molécules mixtes ayant au moins un type d'un motif ionique magnétique d'un matériau magnétique moléculaire présentant un ferromagnétisme et au moins un type d'un motif ionique magnétique de matériau magnétique moléculaire présentant un ferrimagnétisme, **caractérisé en ce que** les caractéristiques magnétiques peuvent être changées par irradiation de lumière.

**4.** Matériau magnétique à molécules mixtes selon l'une des revendications 1 à 3, dans lequel le matériau magnétique peut être changé en une substance ferromagnétique et une substance anti-ferromagnétique.

**5.** Matériau magnétique à molécules mixtes selon l'une des revendications 1 à 3, dans lequel les caractéristiques magnétiques telles que la magnétisation à saturation, le force coercitive, la magnétisation résiduelle, le point de transition de phase magnétique, etc, peuvent être changées.

**6.** Matériau magnétique à molécules mixtes selon l'une des revendications 1 à 5, dans lequel le motif ionique magnétique est constitué d'un complexe d'un métal polyvalent qui est un métal de transition.

**7.** Matériau magnétique à molécules mixtes selon la revendication 6, dans lequel au moins le motif ionique magnétique a

$$M_1 - B - M_2$$

(où chacun de $M_1$, $M_2$ et B représente un ion magnétique et l'interaction d'échange (J) entre chacun de $M_1$ et $M_2$ et B est J > 0 et J < 0 respectivement vis-à-vis de B) et le rapport existant entre les ions magnétiques $M_1$ et $M_2$ est contrôlé.

**8.** Matériau magnétique à molécules mixtes selon l'une des revendications 1 à 7, dans lequel le pôle magnétique est inversable.

*FIG. 1*

● A
○ B
□ N atom
△ C atom

# FIG. 2

$$(Ni^{II}_xMn^{II}_{(1-x)})_{1.5}Cr^{III}(CN)_6$$

## FIG. 3

· *FIG. 4*

## FIG. 5

FIG. 6

*FIG. 7*

$(Ni_{0.38}Mn_{0.62})_{1.5}Cr(CN)_6 \cdot 7.5H_2O$

## FIG. 8

## FIG. 9

*FIG. 10*

# Fig 11

Light irradiation(h$\nu$)  $\Delta$

*Fig 12*